# FASCICULE DE BREVET EUROPEEN

(11) **EP 2 723 001 B1**
(45) Date de publication et mention de la délivrance du brevet: **24.06.2015**
(21) Numéro de dépôt: 13187790.4
(22) Date de dépôt: 08.10.2013
(51) Int. Cl.: H04B 7/185

(54) **Système de télécommunications par satellite à grande capacité à couverture multifaisceaux et à réutilisation de fréquence**
Hochkapazität Satelliten Telekommunikationssystem mit Mehrstrahlabdeckung und Frequenzwiedergebrauch.
High capacity satellite telecommunication system with multibeam coverage and frequency reusing.

(30) Priorité: 18.10.2012 FR 1202782
(43) Date de publication de la demande: 23.04.2014
(73) Titulaire: Thales, 92200 Neuilly Sur Seine (FR)
(72) Inventeur: Gayrard, Jean-Didier, 31270 Cugnaux (FR)
(74) Mandataire: Nguyen, Dominique

(56) Documents cités:
- US-A1- 2006 189 275
- US-A1- 2007 037 514
- US-A1- 2010 279 604
- US-B1- 6 181 450

## Description

La présente invention concerne un système de télécommunications par satellite à grande capacité à couverture multifaisceaux et à réutilisation de fréquence. Elle s'applique aux systèmes de télécommunications par satellite large bande HTS (en anglais : High Throughput Satellite) du service fixe haute densité HD-FSS (en anglais : High Density - Fixe Satellite Service) notamment pour l'accès par satellite au réseau Internet ou pour des liaisons entre utilisateurs par l'intermédiaire d'un système satellitaire.

Actuellement, les systèmes à large bande ont une bande passante comprise entre quelques dizaines à plusieurs centaines de GigaHertz. Les besoins en bande passante étant en croissance, les systèmes de télécommunications futurs devront avoir une bande passante supérieure pouvant atteindre mille GigaHertz.

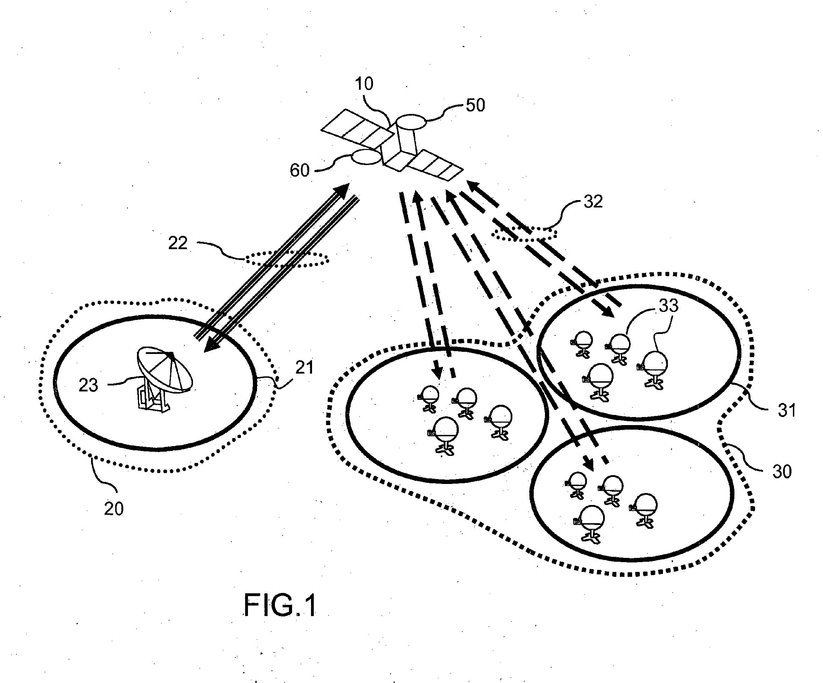

Comme représenté par exemple sur la figure 1, un système de télécommunications par satellite large bande du service fixe haute densité pour l'accès par satellite au réseau Internet selon l'art antérieur est typiquement constitué d'un satellite à large bande 10, d'au moins une station passerelle 23 (en anglais : gateway) située dans une cellule passerelle 21 localisée dans une première zone de service terrestre 20, une pluralité de terminaux utilisateurs 33 situés dans plusieurs cellules utilisateurs 31 différentes réparties dans une deuxième zone de service terrestre 30. Le satellite 10 comporte un système d'antennes d'émission et de réception 60, 50 couvrant respectivement les zones de service terrestres 20 et 30. La cellule passerelle 21 est couverte par un unique faisceau du premier système d'antennes 60 du satellite 10 et les cellules utilisateurs 31 sont couvertes par différents faisceaux du deuxième système d'antennes 50 du satellite 10. La station passerelle 23 comporte un système d'émission et de réception radiofréquence muni d'un système d'antennes d'émission et de réception et est reliée aux terminaux utilisateurs 33 par l'intermédiaire du satellite 10 par des liaisons bidirectionnelles 22, 32. Une liaison d'une station passerelle 23 vers les terminaux utilisateurs 33 via le satellite 10 est appelée liaison aller (en anglais : forward link). Une liaison d'un terminal utilisateur 33 vers les stations passerelles 23 via le satellite 10 est appelée liaison retour (en anglais : return link). Les liaisons entre la station passerelle 23 et le satellite large bande 10 sont appelées liaisons de contribution (en anglais : feeder link). Les liaisons de contribution 22 sont donc constituées de liaisons aller dans un sens montant 22fwd de la station passerelle vers le satellite 10 et de liaisons retour dans un sens descendant 22rtn du satellite 10 vers la station passerelle 23. Les liaisons entre l'ensemble des terminaux utilisateurs 33 et le satellite large bande 10 sont appelés liaisons utilisateurs (en anglais : user link). Les liaisons utilisateurs 32 sont donc constituées de liaisons retour dans le sens montant des utilisateurs vers le satellite 10 et de liaisons aller dans le sens descendant du satellite 10 vers les utilisateurs.

Cependant, l'Union Internationale des Télécommunications UIT a alloué des bandes de fréquences de fonctionnement pour les quatre types de liaisons, ces bandes de fréquences étant insuffisantes pour garantir une grande capacité aux systèmes pour l'accès par satellite au réseau Internet.

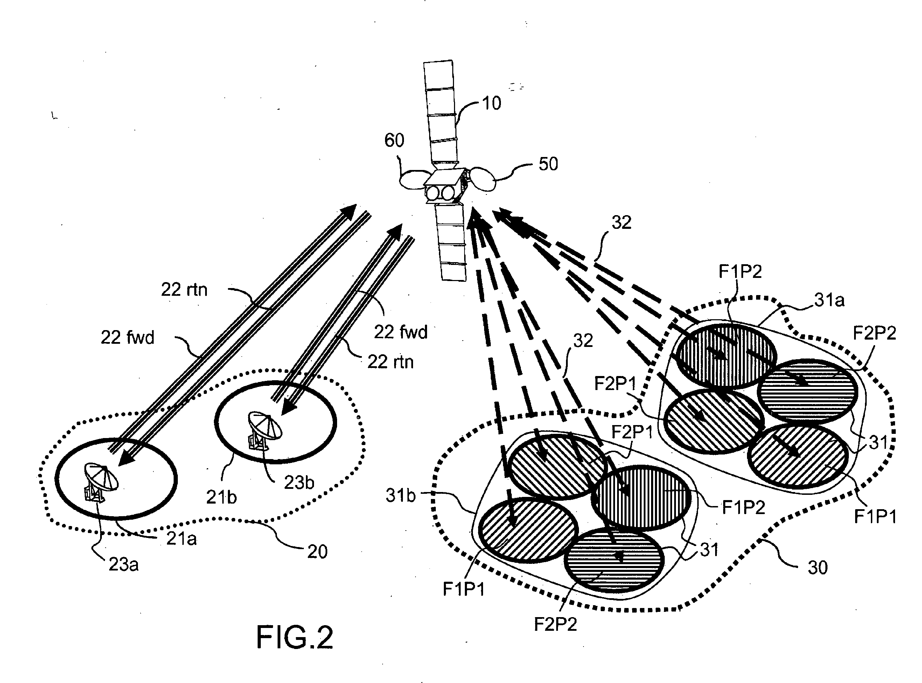

Pour augmenter significativement la capacité de tels systèmes, il est connu d'utiliser un système de télécommunications par satellite large bande à couverture multifaisceaux et à réutilisation de fréquence comme représenté par exemple sur la figure 2. Dans ce système, la zone de service utilisateurs 30 est découpée en plusieurs dizaines de cellules utilisateurs 31, chaque cellule utilisateurs 31 étant illuminée par un faisceau d'un système d'antennes multifaisceaux 50 du satellite 10. La zone de service passerelle 20 est également découpée en dizaines de cellules passerelles 21a, 21b, chaque cellule passerelle 21a, 21b comportant une seule station passerelle 23a, 23b illuminée par un faisceau d'un système d'antennes multifaisceaux 60 du satellite 10. Entre deux stations passerelles 23a, 23b suffisamment distantes l'une de l'autre pour éliminer un risque d'interférences, c'est-à-dire espacées de quelques centaines de kilomètres, il est possible de réutiliser la même bande de fréquence allouée aux liaisons de contributions 22.

Dans le cas simplifié représenté sur la figure 2, le système comporte huit cellules utilisateurs 31 réparties en deux groupes distants 31 a, 31 b de quatre cellules utilisateurs dans la zone de service utilisateurs 30 et deux stations passerelles dans la zone de service passerelle 20. Entre deux cellules utilisateurs non adjacentes appartenant à des groupes différents, 31a, 31b, l'isolation entre les deux faisceaux illuminant les deux cellules utilisateurs est suffisante pour pouvoir réutiliser la même bande de fréquence allouée aux liaisons utilisateurs. Les deux stations passerelles 23a, 23b sont distantes de quelques centaines de kilomètres et utilisent la même bande de fréquence allouée aux liaisons de contribution. La première station passerelle 23a, localisée dans la cellule 21a, communique uniquement avec les terminaux utilisateurs localisés dans le premier groupe 31a de quatre cellules utilisateurs de la zone de service utilisateurs 30. De même, la deuxième station passerelle 23b, localisée dans sa cellule passerelle 21 b, communique uniquement avec les terminaux utilisateurs localisés dans le deuxième groupe 31b de quatre cellules utilisateurs. Les quatre cellules utilisateurs 31 appartenant à un même groupe ont des couleurs différentes, une couleur étant définie par des bandes de fréquences différentes ou, dans le cas où les faisceaux utilisateurs sont élaborés dans deux polarisations différentes P1, P2, par un couple F1 P1, F1 P2, F2P1, F2P2 de valeurs de bande de fréquence F1, F2 et de polarisation P1, P2. Tous les groupes de quatre cellules utilisateurs de la zone de service utilisateurs 30 réutilisent les mêmes couleurs.

Par exemple, dans le cas d'un système où chaque station passerelle peut être connectée aux terminaux utilisateurs localisés dans un groupe de quatre cellules utilisateurs, pour servir une zone de service utilisateurs constituée de 80 cellules utilisateurs différentes, il sera nécessaire d'avoir 20 stations passerelles situées dans 20 cellules différentes dans la zone de service passerelle.

La course à la très grande capacité pour les systèmes de télécommunications par satellite large bande à couverture multifaisceaux et à réutilisation de fréquence opérant dans la bande Ka (20 / 30 GHz) a commencé depuis le début des années 2000. Autour de 2005, une première génération de satellites multifaisceaux en bande Ka, tels que IPStar, Wildblue, Spaceway, offrait une capacité avoisinant les 10 Gbps (Gigabits par seconde). A partir de 2010, une deuxième génération de satellites, tels que KaSat, ViaSat-1, atteint une capacité de l'ordre de 100 Gbps. Pour la troisième génération de satellites prévue après 2020, il est nécessaire d'atteindre une capacité proche du Terabit par seconde (1000 Gbps).

Pour atteindre cette capacité, le nombre de cellules utilisateurs devra dépasser 200 et la bande de fréquence allouée par cellule atteindre 1,5 GHz. Le nombre de stations passerelles et le nombre de cellules de la zone de service passerelle qui seront nécessaires pour communiquer avec tous les terminaux utilisateurs de toutes les cellules utilisateurs devra alors augmenter. Ainsi pour un système de télécommunications à 200 cellules utilisateurs ayant une bande passante allouée de 1,5 GHz par cellule utilisateurs, avec les systèmes connus, il faut 50 cellules passerelles de 3 GHz de bande passante allouée, soit 6 GHz dans le cas de l'utilisation de deux polarisations différentes et donc 50 stations passerelles.

Cela pose plusieurs problèmes. D'une part, le coût d'acquisition et d'opération de ce grand nombre de stations passerelles devient très important et peut mettre en péril l'équilibre financier de ces systèmes de télécommunications, d'autre part, il devient difficile de trouver des nouveaux sites géographiques pour installer de nouvelles stations passerelles. En effet deux contraintes président à la sélection des sites. La première contrainte est la distance minimale séparant deux stations passerelles afin d'assurer une isolation radiofréquence entre les faisceaux émis par les antennes du satellite qui soit suffisante pour pouvoir réutiliser la même bande de fréquence d'un faisceau à un autre faisceau. La deuxième contrainte est que les sites des stations passerelles doivent être reliés aux infrastructures de réseaux terrestres haut débit pour permettre la connexion à Internet. La distance entre le site de la station passerelle et le point d'accès aux réseaux terrestres doit être courte pour minimiser les coûts de connexion. Ces deux contraintes souvent antagonistes compliquent la sélection de nouveaux sites pour la future génération de systèmes de télécommunications par satellite large bande. Une troisième contrainte pour les systèmes de télécommunications de troisième génération est de réutiliser les sites existants de stations passerelles des systèmes de deuxième génération.

L'utilisation des bandes EHF entre 37,5 GHz et 42.5 GHz correspondant à la bande Q et entre 47,2 GHz et 51,4 GHz correspondant à la bande V est envisagée pour les liaisons de contribution. Dans ce cas, les liaisons aller montantes de la station passerelle vers le satellite seront en bande V et les liaisons retour descendantes du satellite vers la station passerelle seront en bande Q. Cependant, les liaisons de radiocommunication dans ces bandes de fréquence subissent de fortes absorptions atmosphériques dues aux nuages et à la vapeur d'eau et de profonds évanouissements dus aux précipitations telles que la pluie et la neige. Pour maintenir une bonne disponibilité du système, supérieure à 99.95% par exemple, et pour éviter un surdimensionnement des liaisons radiofréquence, il est souhaitable de diversifier les sites et donc d'installer des stations passerelles supplémentaires qui se substitueront provisoirement aux stations passerelles qui subissent des évanouissements liées à de mauvaises conditions climatiques temporaires. Ainsi par exemple un système de télécommunications à 50 stations passerelles devrait avoir 10 sites de stations supplémentaires pour mettre en oeuvre la diversité de sites, ce qui va donc nécessiter le choix et l'aménagement de 60 sites de stations passerelles, et d'avoir, à bord du satellite, un système d'antennes capable d'élaborer 60 faisceaux. Il est donc primordial de réduire drastiquement le nombre de sites de stations passerelles à aménager.

Le brevet US 2007/0037514 décrit un système de communication par satellite pour terminaux mobiles permettant de diminuer le nombre de sites de stations passerelles en utilisant des satellites compagnons mais la structure des charges utiles des différents satellites n'est pas adaptée à un système à large bande ni à une couverture utilisateurs multifaisceaux avec réutilisation de fréquence.

Le but de l'invention est de réaliser un système de télécommunications par satellite à couverture multifaisceaux et à réutilisation de fréquences permettant de réduire le nombre de sites de stations passerelles et donc le nombre de cellules passerelles dans la zone de service passerelle, par au moins un facteur deux et d'augmenter la largeur de bande passante des liaisons de contribution entre les stations passerelles et le satellite.

Pour cela, selon l'invention, le système de télécommunications par satellite à couverture multifaisceaux et à réutilisation de fréquences comporte au moins une première station passerelle localisée dans une cellule passerelle d'une zone de service passerelle terrestre, des terminaux utilisateurs situés dans des cellules utilisateurs d'une zone de service utilisateurs terrestre, un satellite principal situé sur une orbite géostationnaire, une première liaison de contribution bidirectionnelle reliant la première station passerelle au satellite principal et des liaisons utilisateurs bidirectionnelles reliant le satellite principal aux cellules utilisateurs. Le système de télécommunications comporte en outre au moins une deuxième station passerelle située dans ladite cellule passerelle, au moins un satellite compagnon espacé d'une distance d'au moins trois degrés sur l'arc orbital géostationnaire du satellite principal, une seconde liaison de contribution bidirectionnelle reliant la deuxième station passerelle au satellite compagnon, et une liaison inter-satellites bidirectionnelle reliant le satellite principal et le satellite compagnon. La liaison inter-satellites est une liaison optique infrarouge en espace libre et le satellite principal comporte un ensemble de répéteurs optiques inter-satellites aller connecté à un ensemble de répéteurs radiofréquence aller et un ensemble de répéteurs optiques inter-satellites retour connecté à un ensemble de répéteurs radiofréquence retour. L'ensemble de répéteurs optiques inter-satellites aller comporte un démultiplexeur en longueur d'onde destiné à séparer des porteuses optiques transmises par la liaison inter-satellites et plusieurs démodulateurs optique-électriques destinés à démoduler des signaux optiques provenant de la liaison inter-satellites et à restituer des signaux radiofréquence à émettre vers des cellules utilisateurs, chaque démodulateur étant dédié à une porteuse optique et l'ensemble de répéteurs optiques inter-satellites retour comporte des modulateurs électro-optiques destinés à moduler des porteuses optiques par des signaux radiofréquence provenant des cellules utilisateurs et un multiplexeur en longueur d'onde qui regroupe les différentes porteuses optiques à émettre vers le satellite compagnon.

Selon un premier mode de réalisation de l'invention, la première et la seconde liaison de contribution sont des liaisons radiofréquence et le satellite compagnon comporte un ensemble de répéteurs électro-optiques aller et un ensemble de répéteurs électro-optiques retour, l'ensemble de répéteurs électro-optiques aller comportant des modulateurs électro-optiques aptes à moduler des porteuses optiques par des signaux radiofréquence provenant de la deuxième station passerelle et un multiplexeur en longueur d'onde qui regroupe les différentes porteuses optiques, l'ensemble de répéteurs électro-optiques retour comportant un démultiplexeur en longueur d'onde qui sépare les différentes porteuses optiques et des démodulateurs optique-électriques aptes à démoduler des signaux optiques reçus de la liaison inter-satellites et à restituer des signaux radiofréquence.

Avantageusement, dans le premier mode de réalisation de l'invention, le satellite principal comporte en outre un premier système d'antennes multifaisceaux pour assurer l'émission et la réception des faisceaux de la première station passerelle dans deux polarisations orthogonales, un deuxième système d'antennes multifaisceaux pour assurer l'émission et la réception des faisceaux utilisateurs et un terminal optique pour assurer des communications sur les liaisons inter-satellites.

Selon un deuxième mode de réalisation de l'invention, la première et la seconde liaison de contribution sont des liaisons optiques infrarouge en espace libre. Dans ce cas, le satellite compagnon comporte un ensemble de répéteurs optiques aller apte à assurer la réception et la transmission des porteuses optiques provenant de la deuxième station passerelle vers la liaison inter-satellite et un ensemble de répéteurs optiques retour apte à assurer la réception et le démultiplexage en longueur d'onde des porteuses optiques provenant de la liaison inter-satellites puis l'amplification et le multiplexage en longueur d'onde des porteuses optiques à émettre vers la deuxième station passerelle et le satellite principal comporte un ensemble de répéteurs optiques aller connecté à un ensemble de répéteurs radiofréquence aller et un ensemble de répéteurs optiques retour connecté à un ensemble de répéteurs radiofréquence retour, l'ensemble de répéteurs optiques aller étant apte à assurer le démultiplexage en longueur d'onde et la démodulation des porteuses optiques provenant de la première station passerelle et à destination des liaisons utilisateurs, l'ensemble de répéteurs optiques retour étant apte à assurer la modulation de porteuses optiques par des signaux radiofréquence provenant des liaisons utilisateurs et le multiplexage en longueur d'onde des porteuses optiques à destination de la première station passerelle.

Avantageusement, dans le deuxième mode de réalisation de l'invention, le satellite principal comporte en outre un système d'antennes multifaisceaux pour assurer l'émission et la réception des faisceaux utilisateurs, et des terminaux optiques pour assurer des communications sur les liaisons inter-satellites et sur les liaisons de contribution avec la première station passerelle.

Avantageusement, le système de télécommunications par satellite peut comporter plusieurs satellites compagnons, chaque satellite compagnon étant relié au satellite principal par une liaison inter-satellites dédiée, plusieurs secondes stations passerelles localisées dans la cellule passerelle et plusieurs secondes liaisons de contribution bidirectionnelles reliant chaque satellite compagnon à une seconde station passerelle correspondante.

Avantageusement, le satellite compagnon peut être un satellite passager monté à bord d'un satellite tiers situé sur l'orbite géostationnaire.

D'autres caractéristiques et avantages de l'invention apparaîtront clairement à la lecture de la description détaillée qui suit, faite à titre d'exemple non limitatif et en référence aux dessins annexés qui représentent :
- figure 1 : un schéma d'un premier exemple de système de télécommunications par satellite large bande, selon l'art antérieur ;
- figure 2 : un schéma d'un deuxième exemple de système de télécommunications par satellite large bande, selon l'art antérieur ;
- figure 3 : un schéma d'un premier exemple de système de télécommunications par satellite large bande, selon l'invention ;
- figure 4a : un schéma d'un deuxième exemple de système de télécommunications par satellite large bande, selon l'invention ;
- figure 4b : un schéma d'un troisième exemple de système de télécommunications par satellite large bande, selon l'invention ;
- figure 4c : un schéma d'un quatrième exemple de système de télécommunications par satellite large bande, selon l'invention ;
- figure 5a : un schéma synoptique d'un exemple d'architecture de la charge utile d'un satellite principal large bande, selon un premier mode de réalisation de l'invention ;
- figures 5b et 5c : deux schémas, respectivement dans les sens aller et retour, d'un exemple de configuration des répéteurs du satellite principal, selon le premier mode de réalisation de l'invention ;
- figure 6a : un schéma synoptique d'un exemple d'architecture de la charge utile d'un satellite compagnon, selon le premier mode de réalisation de l'invention ;
- figure 6b : un schéma d'un exemple de configuration des répéteurs du satellite compagnon, selon le premier mode de réalisation de l'invention ;
- figure 7 : un exemple de plan de longueurs d'onde sur la liaison inter-satellites, selon le premier mode de réalisation de l'invention ;
- figure 8a : un schéma synoptique d'un exemple d'architecture de la charge utile d'un satellite principal large bande, selon un deuxième mode de réalisation de l'invention ;
- figures 8b et 8c : deux schémas, respectivement dans les sens aller et retour, d'un exemple de configuration des répéteurs du satellite principal, selon le deuxième mode de réalisation de l'invention ;
- figure 9 : un schéma synoptique d'un exemple d'architecture de la charge utile d'un satellite compagnon, selon le deuxième mode de réalisation de l'invention.

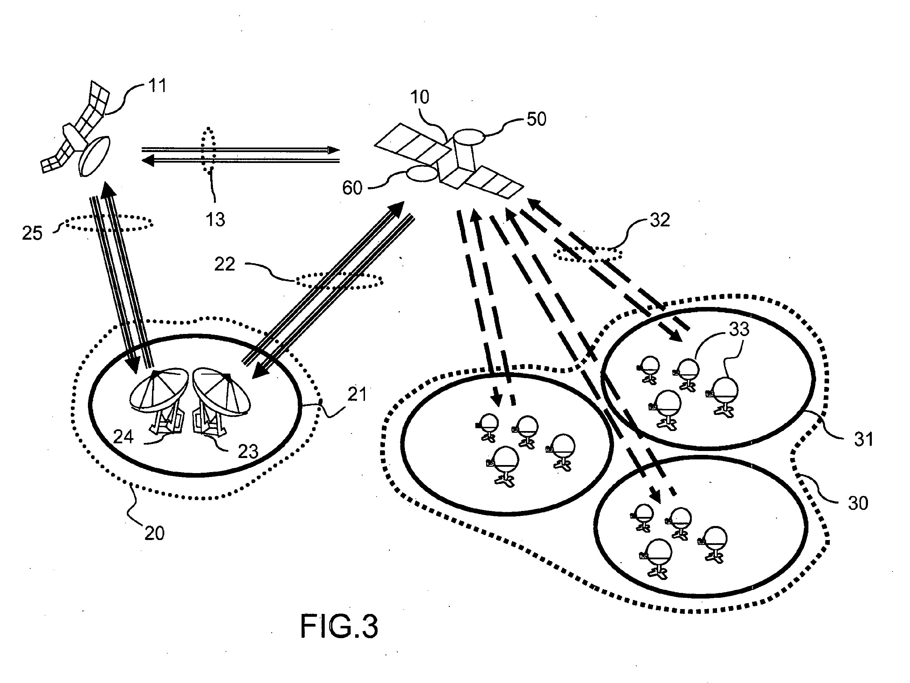

Le système de télécommunications par satellite à couverture multifaisceaux et à réutilisation de fréquences représenté sur l'exemple de la figure 3 comporte un premier satellite large bande, appelé satellite principal 10, au moins un deuxième satellite appelé satellite compagnon 11, au moins une cellule passerelle 21 située dans une zone de service passerelle terrestre 20, au moins deux stations passerelles terrestres 23, 24 localisées dans la même cellule passerelle 21, des terminaux utilisateurs 33 répartis dans plusieurs cellules utilisateurs différentes 31 situées dans une même zone de service utilisateurs terrestre 30, par exemple trois cellules utilisateurs différentes 31 sont représentées sur la figure 3. La cellule passerelle 21 est destinée à être illuminée par un premier faisceau passerelle transmis par le satellite principal 10 et par un deuxième faisceau passerelle transmis par le satellite compagnon 11 et les cellules utilisateurs 31 sont destinées à être illuminées par des faisceaux utilisateurs transmis par le satellite principal 10, chaque cellule utilisateurs étant illuminée par un faisceau différent. Le satellite principal 10 est en communication avec le satellite compagnon 11 par une liaison inter-satellites bidirectionnelle 13. La première station passerelle 23 est en communication avec le satellite principal 10 par une première liaison de contribution bidirectionnelle 22, la deuxième station passerelle 24 est en communication avec le satellite compagnon 11 par une seconde liaison de contribution bidirectionnelle 25, les terminaux utilisateurs 33 sont en communication avec le satellite principal 10 par des liaisons de radiocommunication bidirectionnelles 32.

Pour un système de télécommunications comportant plusieurs cellules passerelles différentes, chaque cellule passerelle comporte une première station passerelle 23 en communication avec le satellite principal 10 et une deuxième station passerelle 24 en communication avec le satellite compagnon 11. Un satellite compagnon permet donc de diviser par deux le nombre de sites d'implantation des stations passerelles au sol et donc le nombre de cellules passerelles.

Le satellite compagnon 11 et le satellite principal 10 sont situés à des positions orbitales géostationnaires séparées et suffisamment éloignées l'une de l'autre, leur distance de séparation minimale étant typiquement de l'ordre de trois degrés sur l'arc orbital géostationnaire, de telle façon que la deuxième station passerelle 24 qui est en communication avec le satellite compagnon 11 ne reçoive pas des signaux issus du satellite principal 10 et que la station passerelle 23 qui est en communication avec le satellite principal 10 ne reçoive pas des signaux issus du satellite compagnon 11. La distance de séparation minimale permet également de pouvoir réutiliser la même bande de fréquence pour les signaux issus des deux satellites principal 10 et compagnon 11 sans problème d'interférence entre les communications des deux satellites.

Pour réduire encore le nombre de sites et le nombre de cellules passerelles, il est possible d'augmenter le nombre de satellites compagnons, et donc d'augmenter le nombre de stations passerelles dans une même cellule passerelle et le nombre de liaisons de contribution associées. Les satellites compagnons peuvent être lancés au cours de la vie du satellite principal pour faire face à l'augmentation du trafic. La réduction du nombre de sites et de cellules passerelles permet d'installer un maximum de stations passerelles dans des zones climatiques favorables aux liaisons radiofréquence en bandes Ka ou V/Q ou aux liaisons optiques infrarouge IR, par exemple les zones arides, et ainsi de réduire le nombre de stations passerelles en diversité de sites. L'économie faite par la réduction du nombre de site de stations passerelle contrebalance le coût de développement, de fabrication et de lancement du satellite compagnon. Pour diminuer les coûts, il est également possible de placer la charge utile du satellite compagnon sur un satellite tiers situé sur l'orbite géostationnaire, le satellite compagnon étant alors le satellite tiers (en anglais : piggy back satellite) situé sur l'orbite géostationnaire.

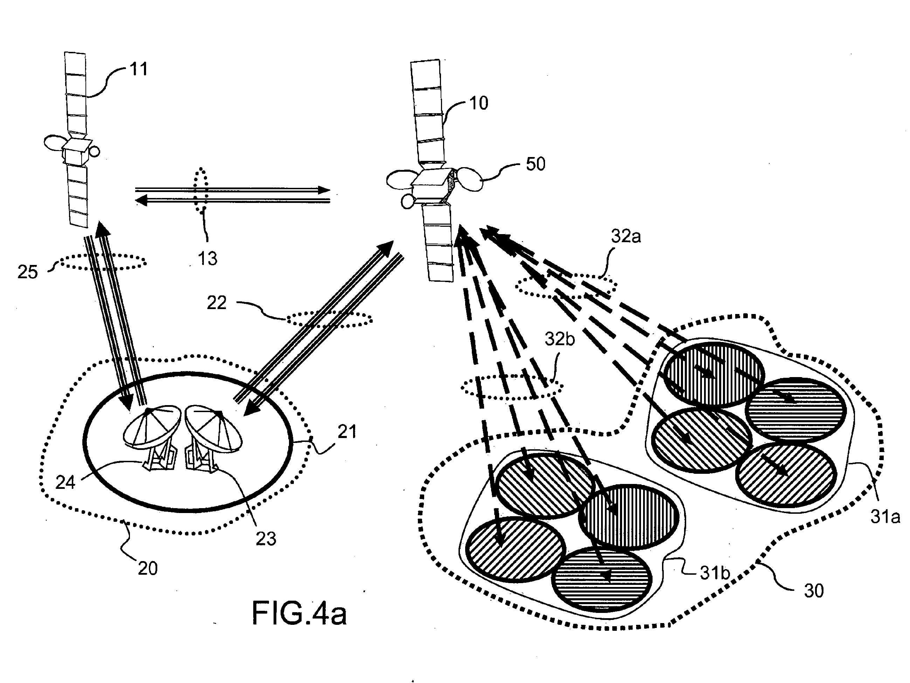

Le nombre de cellules utilisateurs peut être différent de trois. Dans le deuxième exemple représenté sur la figure 4a, le système de télécommunications comporte huit cellules utilisateurs groupées quatre par quatre dans la zone de service utilisateurs 30, les cellules utilisateurs du premier groupe 31 a étant reliées au satellite principal 10 par des premières liaisons utilisateurs 32a et les cellules utilisateurs du deuxième groupe 31b étant reliées au satellite principal 10 par des secondes liaisons utilisateurs 32b.

La deuxième station passerelle 24 localisée dans la cellule passerelle 21 communique uniquement avec les terminaux utilisateurs localisés dans le premier groupe 31a de quatre cellules utilisateurs par l'intermédiaire du satellite compagnon 11 puis du satellite principal 10 alors que la première station passerelle 23, localisée dans la même cellule passerelle 21, communique uniquement avec les terminaux utilisateurs localisés dans le deuxième groupe 31b de quatre cellules utilisateurs par l'intermédiaire du seul satellite principal 10. Les quatre cellules utilisateurs appartenant à un même groupe ont des couleurs différentes, les mêmes couleurs étant réutilisées pour les deux groupes 31 a, 31 b de quatre cellules utilisateurs.

Bien entendu, le nombre de sites de stations passerelles n'est pas limité à un, le nombre de cellules utilisateurs par groupe n'est pas limité à quatre et le nombre de groupes de cellules utilisateurs n'est pas limité à deux.

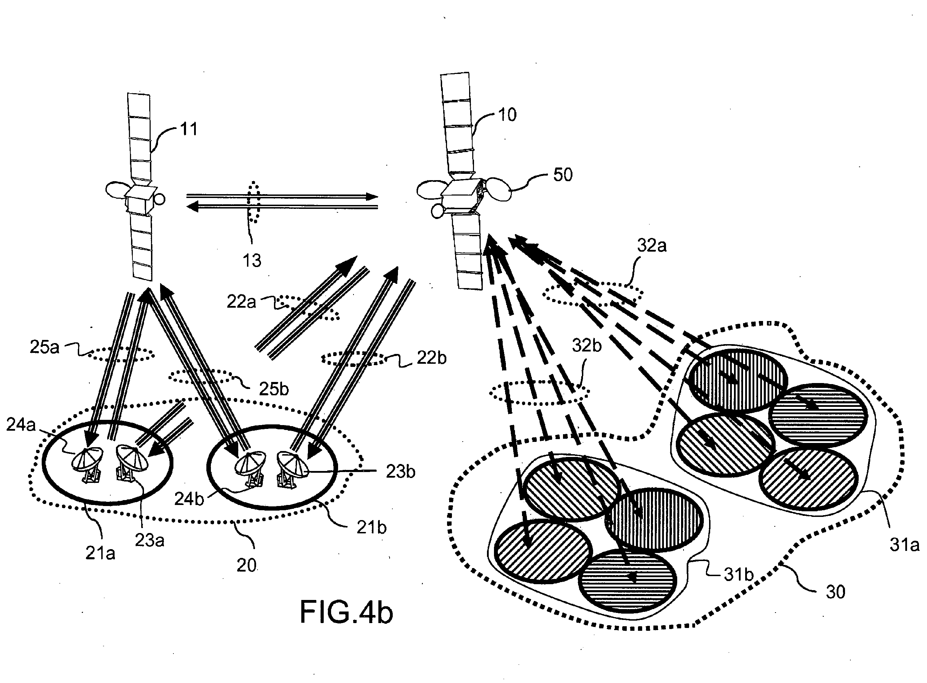

Ainsi, la figure 4b illustre un troisième exemple de système de télécommunications, selon l'invention, dans lequel le nombre de cellules passerelles situées dans la zone de service passerelle 20 est égal à deux, chaque cellule passerelle 21 a, 21 b comportant une première et une seconde station passerelle 23a, 24a, respectivement 23b, 24b. Dans ce cas, il existe deux premières liaisons de contribution bidirectionnelles 22a, 22b reliant respectivement le satellite principal 10 et les deux premières stations passerelles 23a, 23b de chaque cellule passerelle 21a, 21b et deux secondes liaisons de contribution bidirectionnelles 25a, 25b reliant respectivement le satellite compagnon 11 et les deux secondes stations passerelles 24a, 24b de chaque cellule passerelle 21 a, 21 b.

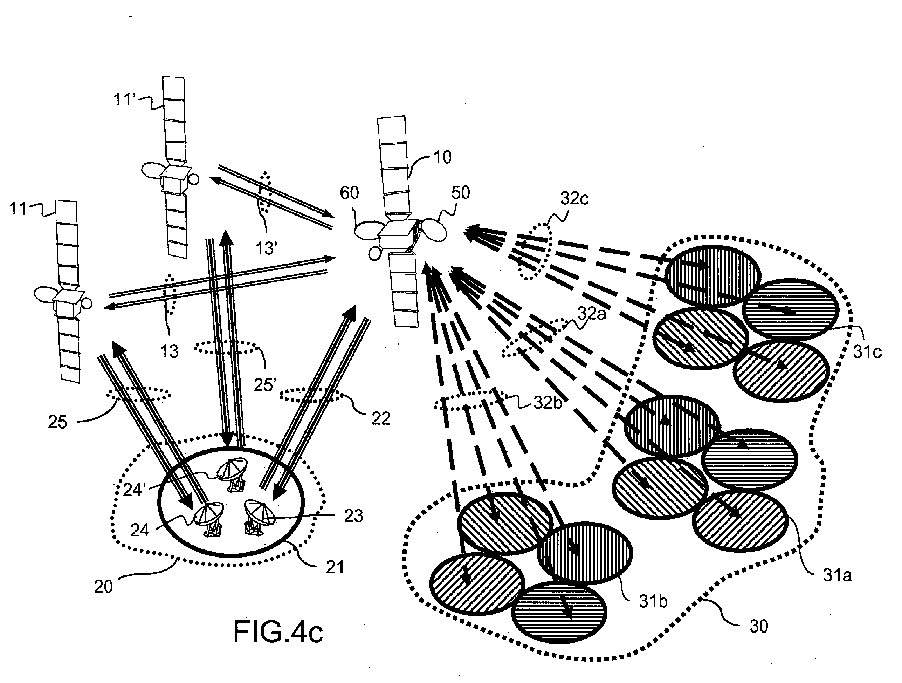

De même, pour augmenter encore la capacité du système de télécommunications par satellite, il est possible d'utiliser plusieurs satellites compagnons et d'augmenter le nombre de stations passerelles dans la cellule passerelle 21, et d'ajouter des liens de contribution additionnels entre chaque satellite compagnon et une station passerelle additionnelle dédiée et entre le satellite principal et chaque station passerelle, comme représenté sur la figure 4c illustrant un quatrième exemple de système de télécommunications, selon l'invention. Dans ce quatrième exemple, le satellite principal 10 est en communication avec deux satellites compagnons 11, 11' par l'intermédiaire de deux liaisons inter-satellites différentes 13, 13' et en communication avec une première station passerelle 23 par l'intermédiaire d'une liaison de contribution 22. Chaque satellite compagnon 11, 11' est en communication avec une seconde, respectivement une troisième, station passerelle 24, 24' située dans la cellule passerelle 21, par l'intermédiaire d'une liaison de contribution respective 25, 25'. Dans ce quatrième exemple, le système de télécommunications comporte douze cellules utilisateurs groupées quatre par quatre dans la zone de service utilisateurs 30, les cellules utilisateurs du premier groupe 31 a étant reliées au satellite principal 10 par des premières liaisons utilisateurs 32a, les cellules utilisateurs du deuxième groupe 31 b étant reliées au satellite principal 10 par des secondes liaisons utilisateurs 32b et les cellules utilisateurs du troisième groupe 31 c étant reliées au satellite principal 10 par des troisièmes liaisons utilisateurs 32c.

Selon un premier mode de réalisation de l'invention et dans le cas simplifié de la figure 4a où il n'y a qu'un seul satellite compagnon et une seule cellule passerelle dans laquelle se trouvent deux stations passerelles, les liaisons de contribution entre la deuxième station passerelle 24 et le satellite compagnon 11 et entre la première station passerelle 23 et le satellite principal 10 sont des liaisons radiofréquence, par exemple en bande Q ou en bande V, et la liaison inter-satellites 13 est une liaison optique en espace libre fonctionnant dans l'infrarouge IR, de préférence autour de 1550 nm, et utilisant des modulations analogiques, notamment la modulation d'intensité à détection directe IM-DD, pour transporter les signaux radiofréquence. L'utilisation de communications optiques bidirectionnelles infrarouges IR entre le satellite principal 10 et le satellite compagnon 11 est très avantageuse. En effet, la bande passante de quelques TeraHertz disponible en infrarouge IR autour de 1550 nm permet de transporter, du satellite compagnon vers le satellite principal, toute la bande passante provenant de la liaison de contribution, sur une seule liaison optique et un seul terminal optique est nécessaire sur le satellite compagnon. L'utilisation de la technologie infrarouge IR à 1550 nm est également avantageuse car il est possible d'utiliser le multiplexage en longueur d'onde de porteuses optiques. Ainsi chaque porteuse optique peut transporter le spectre complet des signaux de radiocommunication d'une station passerelle. Chaque première et deuxième station passerelle 23, 24 est équipée d'un système d'émission et de réception radiofréquence muni d'un système d'antennes d'émission et de réception permettant d'assurer les liaisons de contribution avec des antennes d'émission et de réception correspondantes situées sur les charges utiles du satellite compagnon 11 et du satellite principal 10.

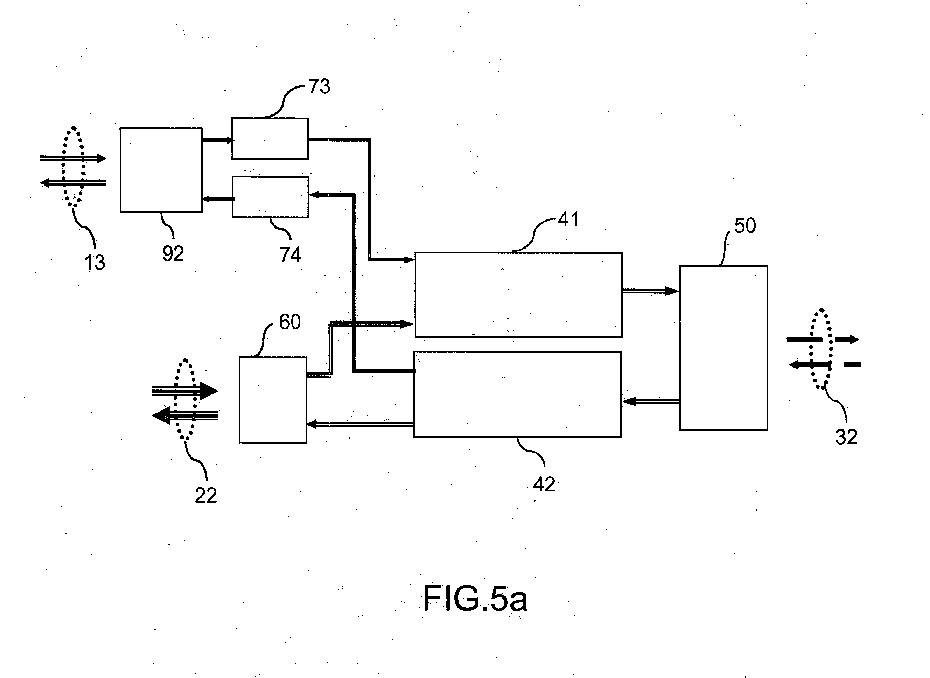

La figure 5a représente un schéma synoptique d'un exemple d'architecture de la charge utile d'un satellite principal large bande 10 selon le premier mode de réalisation de l'invention dans lequel la liaison inter-satellites 13 est une liaison optique en espace libre fonctionnant dans l'infrarouge IR. La charge utile du satellite principal 10 comporte un premier système d'antennes multifaisceaux 60 qui élabore les faisceaux passerelles en émission et en réception dans deux polarisations orthogonales, un deuxième système d'antennes multifaisceaux 50 qui élabore les faisceaux utilisateurs en émission et en réception, un ensemble de répéteurs radiofréquence aller 41 qui assure la réception, le changement de fréquence, le démultiplexage en fréquence et l'amplification de signaux de radiocommunication provenant de la première station passerelle 23, un ensemble de répéteurs radiofréquence retour 42 qui assure la réception, le multiplexage en fréquence, le changement de fréquence et l'amplification de signaux de radiocommunication provenant de toutes les cellules utilisateurs 31, un premier terminal optique 92 qui assure des communications optiques IR bidirectionnelles 13 avec le satellite compagnon 11, un ensemble de répéteurs optiques inter-satellites aller 73 qui assure la réception de porteuses optiques provenant du satellite compagnon 11, le démultiplexage en longueur d'onde et la démodulation des porteuses optiques reçues et un ensemble de répéteurs optiques inter-satellites retour 74 qui assure la modulation, le multiplexage en longueur d'onde et l'amplification de porteuses optiques à émettre vers le satellite compagnon 11. L'ensemble de répéteurs optiques inter-satellites aller 73 et l'ensemble de répéteurs optiques inter-satellites retour 74 sont reliés au premier terminal optique 92. Dans le sens aller, l'ensemble de répéteurs radiofréquence 41 comporte une première entrée reliée au premier système d'antennes multifaisceaux 60, une deuxième entrée reliée à l'ensemble de répéteurs optiques inter-satellites aller 73 et une sortie reliée au deuxième système d'antennes multifaisceaux 50. Dans le sens retour, l'ensemble de répéteurs radiofréquence 42 comporte une première entrée reliée au deuxième système d'antennes multifaisceaux 50, une première sortie reliée au premier système d'antennes multifaisceaux 60 et une deuxième sortie reliée à l'ensemble de répéteurs optiques inter-satellites retour 74.

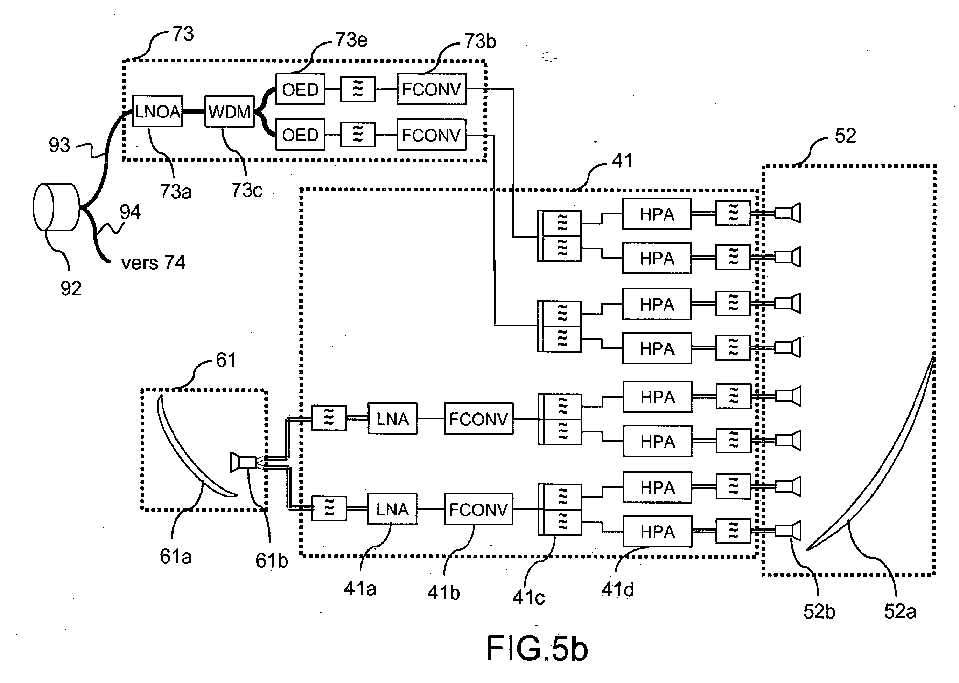

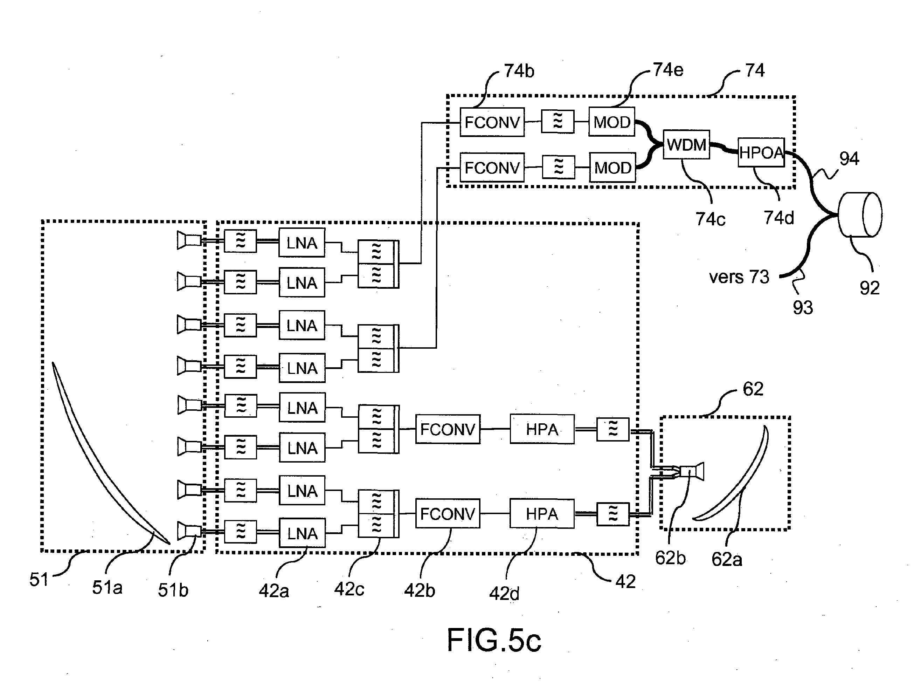

Les figures 5b et 5c représentent deux schémas respectivement dans les sens aller et retour, d'un exemple de configuration des ensembles de répéteurs radiofréquence et optiques aller 41, 73 et retour 42, 74 du satellite principal 10 selon le premier mode de réalisation correspondant à la figure 5a. Dans cet exemple, le premier système d'antennes 60 qui élabore les faisceaux passerelle en émission et en réception dans les deux polarisations orthogonales est scindé en une antenne de réception 61 pouvant être constituée par exemple d'un réflecteur 61 a et d'une source de réception passerelle dipolaire 61 b illuminant le réflecteur 61 a, la source de réception passerelle dipolaire 61 b étant dédiée à la réception d'un faisceau passerelle dans les deux polarisations différentes orthogonales et en une antenne d'émission 62 pouvant être constituée par exemple d'un réflecteur 62a et d'une source d'émission passerelle dipolaire 62b, la source d'émission passerelle dipolaire 62b étant dédiée à l'émission d'un faisceau passerelle dans les deux polarisations différentes orthogonales. De même, le deuxième système d'antennes multifaisceaux 50 qui élabore les faisceaux utilisateurs en émission et en réception est scindé en une antenne de réception 51 pouvant être constituée par exemple d'un réflecteur 51 a et d'un ensemble de sources de réception utilisateurs 51b illuminant le réflecteur 51a, chaque source de réception utilisateurs 51 b étant dédiée à la réception d'un faisceau utilisateurs et en une antenne d'émission 52 pouvant être constituée par exemple d'un réflecteur 52a et d'un ensemble de sources d'émission utilisateurs 52b illuminant le réflecteur 52a, chaque source d'émission utilisateurs 52b étant dédiée à l'émission d'un faisceau utilisateurs. La structure des antennes n'est pas impérative, toute autre structure connue pourrait également convenir. Notamment, d'une part, la même antenne pourrait être utilisée en émission et en réception, et d'autre part, les antennes pourraient ne pas comporter de réflecteur.

Le premier terminal optique 92, peut comporter par exemple un télescope associé à un système de pointage, d'acquisition et de poursuite (en anglais : tracking) du télescope et à un système de balise permettant d'affiner le pointage en direction d'un deuxième terminal optique 95 situé dans la charge utile du satellite compagnon 11.
L'ensemble de répéteurs optiques inter-satellites aller 73 peut comporter par exemple un amplificateur optique à faible bruit LNOA 73a (en anglais : Low Noise Optical Amplifier) relié au premier terminal optique 92 par une fibre optique 93, un démultiplexeur en longueur d'onde WDM 73c (en anglais : Wavelengh Division Multiplexing) qui sépare les différentes porteuses optiques transmises par le premier terminal optique 92, plusieurs démodulateurs optique-électriques OED 73e, chaque démodulateur 73e étant dédié à une porteuse optique, qui restituent les signaux radiofréquence correspondants et des convertisseurs de fréquence FCONV 73b (en anglais : frequency converter) qui transposent en fréquence les signaux radiofréquence d'une première bande de fréquence intermédiaire IF vers la bande de fréquence utilisateurs.
L'ensemble de répéteurs radiofréquence aller 41 comporte par exemple, des amplificateurs à faible bruit LNA 41 a (en anglais : Low Noise Amplifier) reliés à la source de réception passerelle 61 b de l'antenne de réception 61, des convertisseurs de fréquence FCONV 41b qui transposent en fréquence les signaux radiofréquence de la bande de fréquence passerelle vers la bande de fréquence utilisateurs, des démultiplexeurs de fréquence 41c et des amplificateurs de puissance HPA 41d (en anglais : High Power Amplifier) opérant dans les bandes de fréquence utilisateurs.
L'ensemble de répéteurs radiofréquence retour 42 comporte par exemple, des amplificateurs à faible bruit LNA 42a reliés aux sources 51b de l'antenne de réception 51, des démultiplexeurs de fréquence 42c, des convertisseurs de fréquence FCONV 42b qui transposent en fréquence les signaux radiofréquence de la bande de fréquence utilisateurs vers la bande de fréquence passerelle, et des amplificateurs de puissance HPA 42d opérant dans les bandes de fréquence passerelle.
L'ensemble de répéteurs optiques inter-satellites retour 74 comporte par exemple, des convertisseurs de fréquence FCONV 74b qui transposent les signaux radiofréquence de la bande de fréquence utilisateurs vers une deuxième bande de fréquence intermédiaire IF, des modulateurs électro-optiques MOD 74e, qui modulent des porteuses optiques par les signaux radiofréquence, un multiplexeur en longueur d'onde WDM 74c qui regroupe les différentes porteuses optiques, et un amplificateur optique de puissance HPOA 74d relié en émission au premier terminal optique 92 par une fibre optique 94.

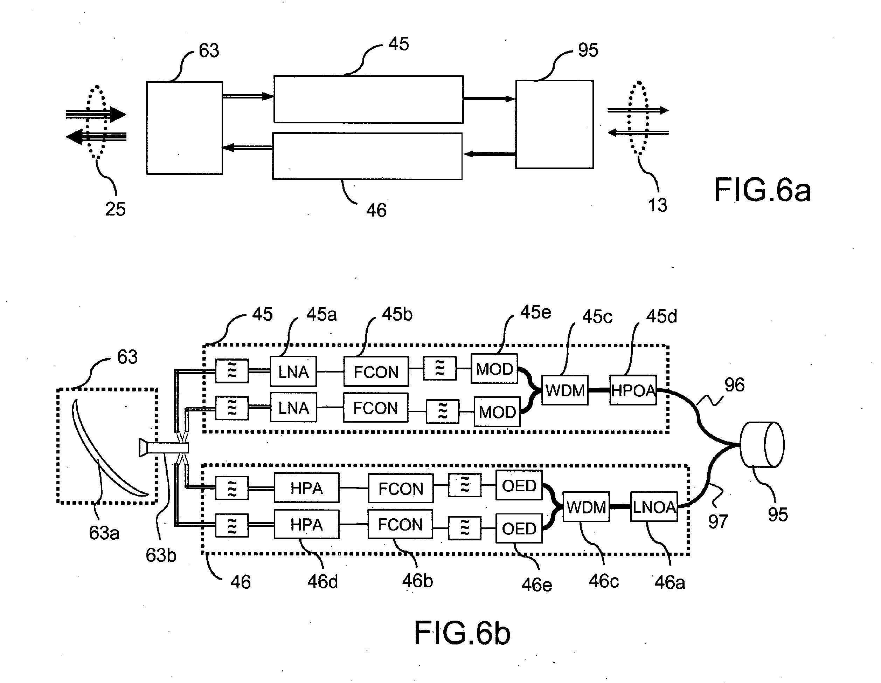

La figure 6a représente un schéma synoptique d'un exemple d'architecture de la charge utile d'un satellite compagnon 11 selon le premier mode de réalisation de l'invention dans lequel la liaison inter-satellites 13 est une liaison optique en espace libre fonctionnant dans l'infrarouge IR. La charge utile du satellite compagnon 11 comporte un troisième système d'antennes multifaisceaux 63 qui élabore des faisceaux passerelle en émission et en réception, un ensemble de répéteurs électro-optiques aller 45, un ensemble de répéteurs électro-optiques retour 46, un deuxième terminal optique 95 qui assure des communications optiques infrarouge IR bidirectionnelles avec le satellite principal 10. Le deuxième terminal optique 95 est relié en sortie de l'ensemble de répéteurs électro-optiques aller 45 et en entrée de l'ensemble de répéteurs électro-optiques retour 46. L'ensemble de répéteurs électro-optiques aller 45 comporte une entrée reliée au troisième système d'antennes multifaisceaux 63 et assure la réception et le changement de fréquence des signaux radiofréquence provenant de la première station passerelle 24, la modulation de porteuses optiques par ces signaux radiofréquence, le multiplexage en longueur d'onde et l'amplification de puissance des porteuses optiques qui sont ensuite transmises au satellite principal 10 par le deuxième terminal optique 95. L'ensemble de répéteurs électro-optiques retour 46 comporte une entrée reliée au deuxième terminal optique 95, une sortie reliée au troisième système d'antennes multifaisceaux 63 et assure la réception des porteuses optiques transmises par le deuxième terminal optique 95, le démultiplexage en longueur d'onde et la démodulation des porteuses optiques, le changement de fréquence et l'amplification de puissance des signaux radiofréquence obtenus.

La figure 6b représente un schéma d'un exemple de configuration des ensembles de répéteurs électro-optiques aller 45 et retour 46 du satellite compagnon 11 selon le premier mode de réalisation de l'invention correspondant à la figure 5a. Le troisième système d'antennes d'émission et de réception 63 peut par exemple être constitué d'un réflecteur 63a et d'une source d'émission et de réception passerelle dipolaire 63b. Le deuxième terminal optique 95 peut être constitué typiquement d'un télescope, d'un système de pointage, d'acquisition et de poursuite du télescope et d'un système de balise permettant d'affiner le pointage en direction du télescope du terminal optique 92 du satellite principal 10, les directions de pointage des deux terminaux optiques 92 et 95 devant être alignées.
L'ensemble de répéteurs électro-optiques aller 45 comporte par exemple des amplificateurs à faible bruit LNA 45a reliés à la source d'émission et de réception passerelle dipolaire 63b du troisième système d'antennes d'émission et de réception 63, des convertisseurs de fréquence FCONV 45b qui transposent en fréquence les signaux radiofréquences de la bande de fréquence passerelle vers une première bande de fréquence intermédiaire IF, des modulateurs électro-optiques MOD 45e, qui modulent des porteuses optiques par les signaux radiofréquences, un multiplexeur en longueur d'onde WDM 45c qui regroupe les différentes porteuses optiques modulées, et un amplificateur optique de puissance HPOA 45d relié au troisième terminal optique 95 par une fibre optique 96.
L'ensemble de répéteurs électro-optiques retour 46 comporte par exemple, un amplificateur optique à faible Bruit LNOA 46a relié au troisième terminal optique 95 par une fibre optique 97, un démultiplexeur en longueur d'onde WDM 46c qui sépare les différentes porteuses optiques modulées, de plusieurs démodulateurs optique-électriques OED 46e, un par porteuse optique, qui restituent les signaux radiofréquence, des convertisseurs de fréquence FCONV 46b qui transposent en fréquence les signaux radiofréquence d'une deuxième bande de fréquence intermédiaire IF vers la bande de fréquence passerelle et des amplificateurs de puissance HPA 46d opérant dans les bandes de fréquence passerelle.

Le choix des bandes de fréquence intermédiaire IF est libre. Ces bandes de fréquences intermédiaires peuvent être choisies en fonction des performances des matériels de conversion optique/électronique, tels que les modulateurs électro-optiques MOD 74e, 45e et les démodulateurs optique-électriques OED 73e, 46e. Le choix des fréquences intermédiaires dans les bandes de fréquence passerelle, par exemple les bandes Q et V, et dans les bandes de fréquence utilisateurs, par exemple la bande Ka, permet de supprimer des équipements de conversion de fréquence 73b, 74b, dans le satellite principal 10 et 45b, 46b, dans le satellite compagnon 11.

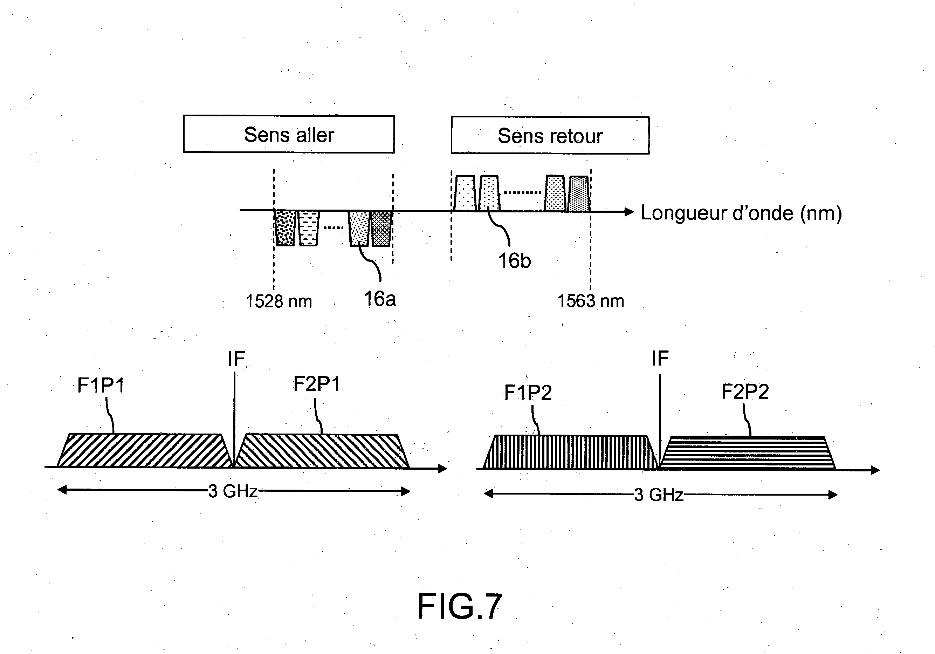

A titre d'exemple non limitatif, comme représenté sur la figure 7, les longueurs d'onde des porteuses optiques 16a, 16b utilisées sur la liaison inter-satellites 13 peuvent être choisies entre 1528 nm et 1563 nm correspondant à la bande C et chaque porteuse optique 16a, 16b peut occuper une bande passante de 0.4 nm et être modulée par un signal radiofréquence de 3 GHz de bande passante à la fréquence intermédiaire IF partageant la bande de fréquence en deux sous-bandes de même largeur et de fréquence centrale F1 et F2. Les porteuses optiques 16a en bas de spectre et dans une première polarisation P1 peuvent être utilisées dans le sens aller du satellite compagnon 11 vers le satellite principal 10 et les porteuses optiques en haut de spectre et dans une deuxième polarisation P2 orthogonale à la première polarisation peuvent être utilisées dans le sens retour du satellite principal 10 vers le satellite compagnon 11. Dans cet exemple où le plan de longueurs d'onde est en bande C, il est possible de multiplexer jusqu'à 30 porteuses optiques dans chaque sens de communication aller et retour de la liaison inter-satellites 13. D'autres bandes de fréquence sont disponibles dans la technologie optique infrarouge pour augmenter la capacité de la liaison inter-satellites 13, telles que la bande S entre 1460 et 1530 nm, ou la bande L entre 1565 et 1625 nm.

Selon un deuxième mode de réalisation de l'invention, la liaison de contribution 22 entre la première station passerelle 23 et le satellite principal 10, la liaison de contribution 25 entre la deuxième station passerelle 24 et le satellite compagnon 11 et la liaison inter-satellites 13 sont des liaisons optiques infrarouge IR. Les liaisons utilisateurs entre le satellite principal 10 et les cellules utilisateurs 31 sont des liaisons radiofréquence. Ce deuxième mode de réalisation a l'avantage de réduire de façon très importante le nombre de sites de stations passerelles nécessaire. Ainsi selon le deuxième mode de réalisation de l'invention, seulement deux sites et quatre stations passerelles réparties deux par deux dans les deux sites suffisent à un système de télécommunications par satellite large bande qui comporte 200 cellules utilisateurs et une bande passante de 1,5 GHz allouée par cellule utilisateurs. Chaque première station passerelle 23 et chaque deuxième station passerelle 24 sont alors équipées d'un terminal optique, par exemple d'un télescope associé à un système de pointage, d'acquisition et de poursuite et à une balise, permettant d'assurer les liaisons de contribution optiques avec un terminal optique correspondant situé dans la charge utile du satellite principal 10 et dans la charge utile du satellite compagnon 11.

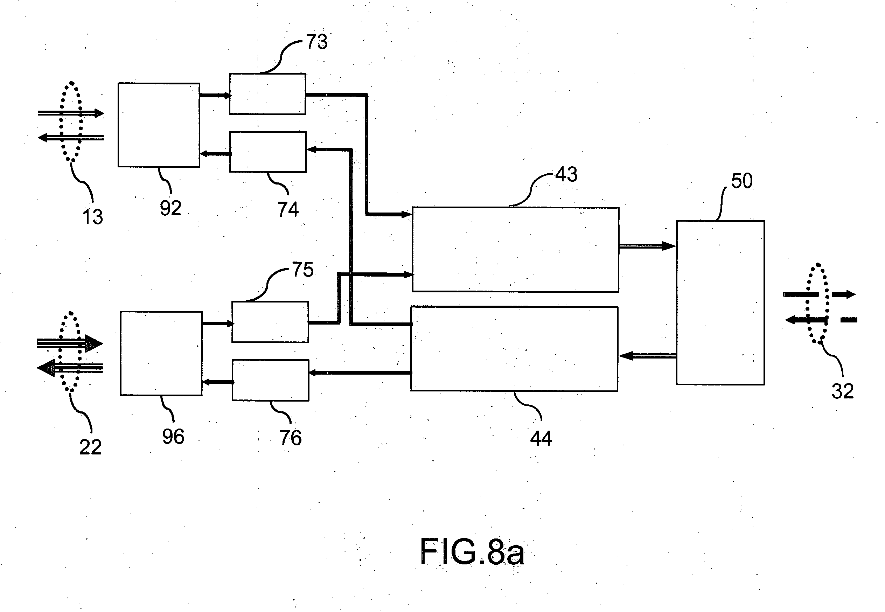

La figure 8a représente un schéma synoptique d'un exemple d'architecture de la charge utile d'un satellite principal 10 large bande selon le deuxième mode de réalisation de l'invention. La charge utile du satellite principal 10 comporte un premier terminal optique 92 qui assure des communications optiques infrarouge IR avec le satellite compagnon 11 sur les liaisons bidirectionnelles inter-satellites 13, un deuxième terminal optique 96 qui assure des communications optiques infrarouge IR bidirectionnelles avec la première station passerelle 23 sur les liaisons de contribution 22, un système d'antennes multifaisceaux 50 qui élabore les faisceaux utilisateurs en émission et en réception, un ensemble de répéteurs radiofréquence aller 43, un ensemble de répéteurs radiofréquence retour 44, un ensemble de répéteurs optiques inter-satellites aller 73, un ensemble de répéteurs optiques inter-satellites retour 74, un ensemble de répéteurs optiques station-satellite aller 75, un ensemble de répéteurs optiques station-satellite retour 76. Le premier terminal optique 92 est relié en réception à l'ensemble de répéteurs optiques inter-satellites retour 74 et en émission à l'ensemble de répéteurs optiques inter-satellites aller 73. Le deuxième terminal optique 96 est relié en réception à l'ensemble de répéteurs optiques station-satellite retour 76 et en émission à l'ensemble de répéteurs optiques station-satellite aller 75. L'ensemble de répéteurs optiques inter-satellites aller 73 est relié en réception au premier terminal optique 92 par une première fibre optique 93 et en émission à l'ensemble de répéteurs radiofréquence aller 43 et assure la réception, le démultiplexage en longueur d'onde et la démodulation de porteuses optiques. L'ensemble de répéteurs radiofréquence aller 43 est relié en réception d'une part à l'ensemble de répéteurs optiques station-satellite aller 75 et d'autre part à l'ensemble de répéteurs optiques inter-satellites aller 73 et en émission au système d'antennes multifaisceaux 50 et assure le changement de fréquence, le démultiplexage en fréquence et l'amplification de signaux de radiocommunication. L'ensemble de répéteurs radiofréquence retour 44 est relié en réception au système d'antennes multifaisceaux 50 et en émission d'une part à l'ensemble de répéteurs optiques station-satellite retour 76 et d'autre part à l'ensemble de répéteurs optiques inter-satellites retour 74 et assure la réception, le multiplexage en fréquence, le changement de fréquence et l'amplification de signaux de radiocommunication. L'ensemble de répéteurs optiques inter-satellites retour 74 est relié en émission au premier terminal optique 92 par une deuxième fibre optique 94 et en réception à l'ensemble de répéteurs radiofréquence retour 44 et assure la modulation, le multiplexage en longueur d'onde et l'amplification de porteuses optiques. L'ensemble de répéteurs station-satellite aller 75 est relié en réception au deuxième terminal optique 96 par une troisième fibre optique 98 et en émission à l'ensemble de répéteurs radiofréquence aller 43 et assure la réception, le démultiplexage en longueur d'onde et la démodulation de porteuses optiques. L'ensemble de répéteurs optiques station-satellite retour 76 est relié en émission au deuxième terminal optique 96 par une quatrième fibre optique 99 et en réception à l'ensemble de répéteurs retour 44 et assure la modulation, le multiplexage en longueur d'onde et l'amplification de puissance de porteuses optiques.

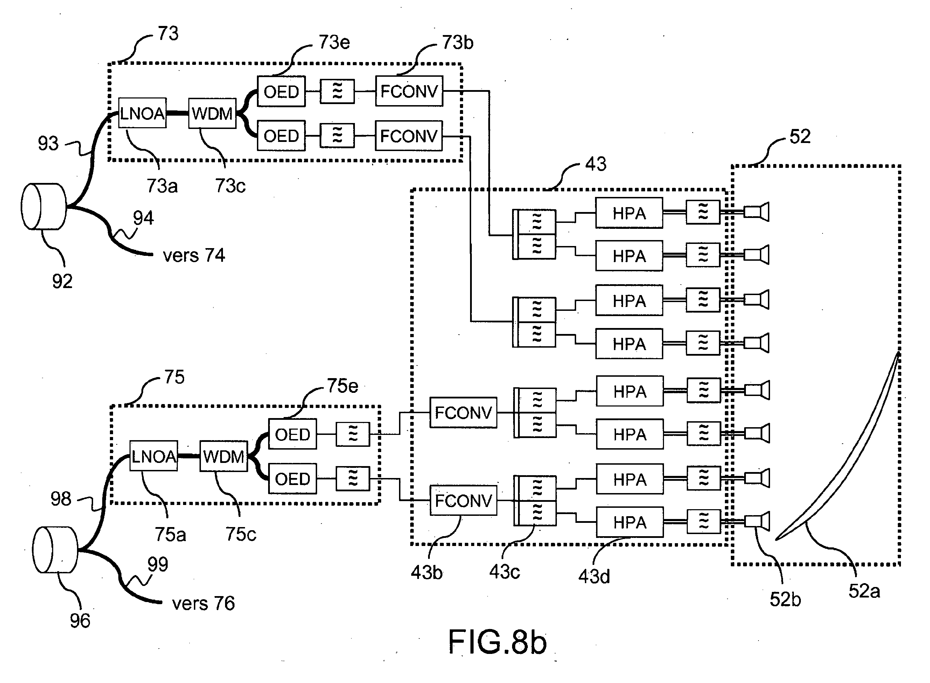

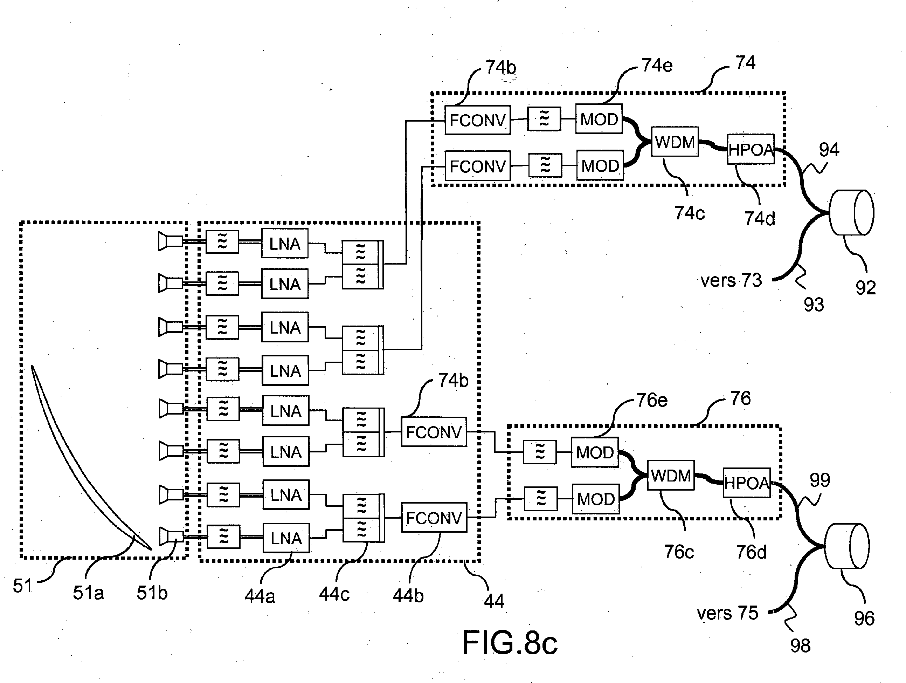

Les figures 8b et 8c représentent deux schémas respectivement dans les sens aller et retour, d'un exemple de configuration des ensembles de répéteurs radiofréquence 43, 44 et optiques 73, 74, 75, 76 du satellite principal 10 selon le deuxième mode de réalisation de l'invention correspondant à la figure 8a. Le deuxième terminal optique 96 comporte un télescope par station passerelle 23 associé à un système de pointage, d'acquisition et de poursuite du télescope et à un système de balise. Le premier terminal optique 92, le système d'antennes multifaisceaux 50, l'ensemble de répéteurs optiques inter-satellites aller 73 et l'ensemble de répéteurs optiques inter-satellites retour 74 sont identiques à ceux décrits en liaison avec le premier mode de réalisation de l'invention.
L'ensemble de répéteurs optiques station-satellite aller 75 comporte, par exemple, un amplificateur optique faible bruit LNOA 75a relié en réception au deuxième terminal optique 96 par la fibre optique 98, un démultiplexeur en longueur d'onde WDM 75c qui sépare les différentes porteuses optiques reçues, plusieurs démodulateurs optique-électriques OED 75e qui restituent les signaux radiofréquence, chaque démodulateur 75e étant dédié à une porteuse optique.
L'ensemble de répéteurs radiofréquence aller 43 comporte, par exemple, des convertisseurs de fréquence FCONV 43b reliés aux démodulateurs OED 75e, qui transposent en fréquence les signaux radiofréquence d'une bande de fréquence intermédiaire IF vers la bande de fréquence utilisateurs, des démultiplexeurs de fréquence 43c et des amplificateurs de puissance HPA 43d opérant dans les bandes de fréquence utilisateurs.
L'ensemble de répéteurs radiofréquence retour 44 comporte, par exemple, des amplificateurs faible bruit LNA 44a reliés en réception à l'antenne de réception utilisateurs 51, des démultiplexeurs de fréquence 44c et des convertisseurs de fréquence FCONV 44b qui transposent en fréquence les signaux radiofréquence de la bande de fréquence utilisateurs vers la bande de fréquence intermédiaire IF.
L'ensemble de répéteurs optiques station-satellite retour 76 comporte des modulateurs électro-optiques MOD 76e, qui modulent des porteuses optiques par les signaux radiofréquence délivrés par les convertisseurs de fréquence FCONV 44b, un multiplexeur en longueur d'onde WDM 76c qui regroupe les différentes porteuses optiques, et un amplificateur optique de puissance HPOA 76d relié en émission au deuxième terminal optique 96 par la quatrième fibre optique 99.

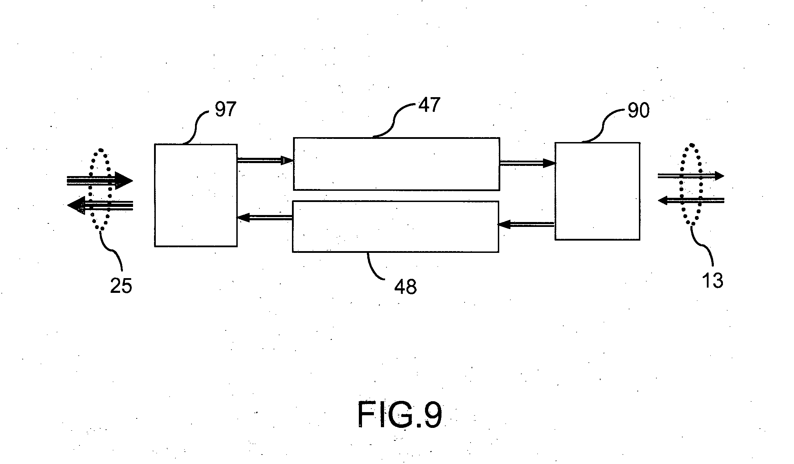

La figure 9 représente un schéma d'architecture générale de la charge utile du satellite compagnon 11 selon le deuxième mode de réalisation de l'invention. La charge utile du satellite compagnon 11 comporte un premier terminal optique 97 qui assure des communications optiques IR bidirectionnelles avec la deuxième station passerelle 24 sur la liaison de contribution 25, un deuxième terminal optique 90 qui assure des communications optiques infrarouge IR bidirectionnelles avec le satellite principal 10 sur la liaison inter-satellites 13, un ensemble de répéteurs optiques aller 47 relié en réception au premier terminal optique 97 et en émission au deuxième terminal optique 90, un ensemble de répéteurs retour 48 relié en réception au deuxième terminal optique 90 et en émission au premier terminal optique 97. L'ensemble de répéteurs optiques aller 47 assure la réception et la retransmission des porteuses optiques transmises par la station passerelle 24 sur les liaisons de contribution 25 par le deuxième terminal optique 90 au satellite principal 10 sur la liaison inter-satellites 13. L'ensemble de répéteurs optiques retour 48 assure la réception, le démultiplexage en longueur d'onde des porteuses optiques transmises par le satellite principal 10 sur la liaison inter-satellites 13, l'amplification de chaque porteuse optique ou d'un groupe de porteuses optiques, puis le multiplexage en longueur d'onde et l'amplification de puissance des porteuses optiques à transmettre par le premier terminal 97 à la deuxième station passerelle 24 sur la liaison de contribution 25.

Selon un troisième mode de réalisation de l'invention, les liaisons inter-satellites 13 reliant le satellite principal 10 et le satellite compagnon 11 sont des liaisons radiofréquence dans les bandes de fréquences allouées par l'UIT aux liaisons inter-satellites comme par exemple des bandes de fréquence situées entre 57 GHz et 71 GHz.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de télécommunications par satellite à couverture multifaisceaux et à réutilisation de fréquences comportant au moins une première station passerelle (23) localisée dans une cellule passerelle (21) d'une zone de service passerelle terrestre (20), des terminaux utilisateurs (33) situés dans des cellules utilisateurs (31) d'une zone de service utilisateurs terrestre (30), un satellite principal (10) situé sur une orbite géostationnaire, une première liaison de contribution bidirectionnelle (22) reliant la première station passerelle (23) au satellite principal (10) et des liaisons utilisateurs bidirectionnelles (32) reliant le satellite principal (10) aux cellules utilisateurs (31), au moins une deuxième station passerelle (24) située dans ladite cellule passerelle (21), au moins un satellite compagnon (11) espacé du satellite principal (10), une seconde liaison de contribution bidirectionnelle (25) reliant la deuxième station passerelle (24) au satellite compagnon (11), et une liaison inter-satellites bidirectionnelle (13) reliant le satellite principal (10) et le satellite compagnon (11), **caractérisé en ce que** la liaison inter-satellites (13) est une liaison optique infrarouge en espace libre, **en ce que** le satellite principal (10) comporte un ensemble de répéteurs optiques inter-satellites aller (73) connecté à un ensemble de répéteurs radiofréquence aller (41) et un ensemble de répéteurs optiques inter-satellites retour (74) connecté à un ensemble de répéteurs radiofréquence retour (42), **en ce que** l'ensemble de répéteurs optiques inter-satellites aller (73) comporte un démultiplexeur en longueur d'onde (73c) destiné à séparer des porteuses optiques transmises par la liaison inter-satellites et plusieurs démodulateurs optique-électriques (73e) destinés à démoduler des signaux optiques provenant de la liaison inter-satellites (13) et à restituer des signaux radiofréquence à émettre vers des cellules utilisateurs, chaque démodulateur étant dédié à une porteuse optique et **en ce que** l'ensemble de répéteurs optiques inter-satellites retour (74) comporte des modulateurs électro-optiques (74e) destinés à moduler des porteuses optiques par des signaux radiofréquence provenant des cellules utilisateurs (31) et un multiplexeur en longueur d'onde (74c) qui regroupe les différentes porteuses optiques à émettre vers le satellite compagnon.

2. Système de télécommunications par satellite selon la revendication 1, **caractérisé en ce que** la première et la seconde liaison de contribution (22, 25) sont des liaisons radiofréquence, et **en ce que** le satellite compagnon (11) comporte un ensemble de répéteurs électro-optiques aller (45) et un ensemble de répéteurs électro-optiques retour (46), l'ensemble de répéteurs électro-optiques aller (45) comportant des modulateurs électro-optiques (45e) aptes à moduler des porteuses optiques par des signaux radiofréquence provenant de la deuxième station passerelle (24) et un multiplexeur en longueur d'onde (45c) qui regroupe les différentes porteuses optiques à émettre sur la liaison inter-satellites (13), l'ensemble de répéteurs électro-optiques retour (46) comportant un démultiplexeur en longueur d'onde (46c) qui sépare les différentes porteuses optiques reçus de la liaison inter-satellites (13) et des démodulateurs optique-électriques (46e) aptes à démoduler les signaux optiques et à restituer des signaux radiofréquence à émettre vers la deuxième station passerelle (24).

3. Système de télécommunications par satellite selon la revendication 1, **caractérisé en ce que** la première et la seconde liaison de contribution (22, 25) sont des liaisons optiques infrarouge en espace libre et **en ce que** le satellite compagnon (11) comporte un ensemble de répéteurs optiques aller (47) apte à assurer la réception et la transmission des porteuses optiques provenant de la deuxième station passerelle (24) vers la liaison inter-satellite (13) et un ensemble de répéteurs optiques retour (48) apte à assurer la réception et le démultiplexage en longueur d'onde des porteuses optiques provenant de la liaison inter-satellites (13) puis l'amplification et le multiplexage en longueur d'onde des porteuses optiques à émettre vers la deuxième station passerelle (24) et **en ce que** le satellite principal (10) comporte en outre un ensemble de répéteurs optiques aller (75) connecté à un ensemble de répéteurs radiofréquence aller (43) et un ensemble de répéteurs optiques retour (76) connecté à un ensemble de répéteurs radiofréquence retour (44), l'ensemble de répéteurs optiques aller (75) étant apte à assurer le démultiplexage en longueur d'onde et la démodulation des porteuses optiques provenant de la première station passerelle (23) et à destination des liaisons utilisateurs (32), l'ensemble de répéteurs optiques retour (76) étant apte à assurer la modulation de porteuses optiques par des signaux radiofréquence provenant des liaisons utilisateurs (32) et le multiplexage en longueur d'onde des porteuses optiques à destination de la première station passerelle (23).

4. Système de télécommunications par satellite selon la revendication 2, **caractérisé en ce que** le satellite principal comporte en outre un premier système d'antennes multifaisceaux (60) pour assurer l'émission et la réception des faisceaux de la première station passerelle (23) dans deux polarisations orthogonales, un deuxième système d'antennes multifaisceaux (50) pour assurer l'émission et la réception des faisceaux utilisateurs et un terminal optique (92) pour assurer des communications sur les liaisons inter-satellites (13).

5. Système de télécommunications par satellite selon la revendication 3, **caractérisé en ce que** le satellite principal comporte en outre un système d'antennes multifaisceaux (50) pour assurer l'émission et la réception des faisceaux utilisateurs, et des terminaux optiques (92, 96) pour assurer des communications sur les liaisons inter-satellites (13) et sur les liaisons de contribution (22) avec la première station passerelle (23).

6. Système de télécommunications par satellite selon l'une des revendications précédentes, **caractérisé en ce qu'il** comporte plusieurs satellites compagnons (11, 11'), chaque satellite compagnon (11, 11') étant relié au satellite principal (10) par une liaison inter-satellites dédiée (13, 13'), plusieurs secondes stations passerelles (24, 24') localisées dans la cellule passerelle (21) et plusieurs secondes liaisons de contribution bidirectionnelles (25, 25') reliant chaque satellite compagnon (11, 11') à une seconde station passerelle (24, 24') correspondante.

7. Système de télécommunications par satellite selon l'une des revendications précédentes, **caractérisé en ce que** le satellite compagnon (11) est un satellite passager monté à bord d'un satellite tiers situé sur l'orbite géostationnaire.

## Patentansprüche

1. Satellitentelekommunikationssystem mit Mehrstrahlabdeckung und Frequenzwiederverwendung, das Folgendes umfasst: wenigstens eine erste Gateway-Station (23), die sich in einer Gateway-Zelle (21) einer Boden-Gateway-Versorgungszone (20) befindet, Benutzerendgeräte (33), die sich in Benutzerzellen (31) einer Boden-Benutzer-Versorgungszone (30) befinden, einen Hauptsatelliten (10), der sich auf einer geostationären Umlaufbahn befindet, eine erste Zweiwege-Zuführungsleitung (22), die die erste Gateway-Station (23) mit dem Hauptsatelliten (10) verbindet, und Zweiwege-Benutzerverbindungen (32), die den Hauptsatelliten (10) mit den Benutzerzellen (31) verbinden, wenigstens eine zweite Gateway-Station (24), die sich in der Gateway-Zelle (21) befindet, wenigstens einen Begleitsatelliten (11) fern von dem Hauptsatelliten (10), eine zweite Zweiwege-Zuführungsleitung (25), die die zweite Gateway-Station (24) mit dem Begleitsatelliten (11) verbindet, und eine Zweiwege-Intersatellitenverbindung (13), die den Hauptsatelliten (10) und den Begleitsatelliten (11) verbindet, **dadurch gekennzeichnet, dass** die Intersatellitenverbindung (13) eine optische Infrarotverbindung im freien Raum ist, dadurch, dass der Hauptsatellit (10) einen Satz von mit einem Satz von Vorwärts-Funkfrequenzrepeatern (41) verbundenen optischen Vorwärts-Intersatelliten-Repeatern (73) und einen Satz von mit einem Satz von Rückwärts-Funkfrequenz-Repeatern (42) verbundenen optischen Rückwärts-Intersatelliten-Repeatern (74) umfasst, dadurch, dass der Satz von optischen Vorwärts-Intersatelliten-Repeatern (73) einen Wellenlängendemultiplexer (73c) zum Trennen von von der Intersatellitenverbindung übertragenen optischen Trägern und mehrere optisch-elektrische Demodulatoren (73e) zum Demodulieren von von der Intersatellitenverbindung (13) kommenden optischen Signalen und zum Zurückgewinnen von Funkfrequenzsignalen zum Senden zu Benutzerzellen umfasst, wobei jeder Demodulator für einen optischen Träger bestimmt ist, und dadurch, dass der Satz von optischen Rückwärts-Intersatelliten-Repeatern (74) elektrooptische Modulatoren (74e) zum Modulieren von von Benutzerzellen (31) kommenden optischen Trägern mit Funkfrequenzsignalen und einen Wellenlängenmultiplexer (74c) umfasst, der die verschiedenen optischen Träger gruppiert, die zu dem Begleitsatelliten zu übertragen sind.

2. Satellitentelekommunikationssystem nach Anspruch 1, **dadurch gekennzeichnet, dass** die erste und zweite Zuführungsleitung (22, 25) Funkfrequenzverbindungen sind, und dadurch, dass der Begleitsatellit (11) einen Satz von elektrooptischen Vorwärts-Repeatern (45) und einen Satz von elektrooptischen Rückwärts-Repeatern (46) umfasst, wobei der Satz von elektrooptischen Vorwärts-Repeatern (45) elektrooptische Modulatoren (45e) zum Modulieren von von der zweiten Gateway-Station (24) kommenden optischen Trägern durch Funkfrequenzsignale und einen Wellenlängenmultiplexer (45c) umfasst, der die verschiedenen optischen Träger gruppiert, die auf der Intersatellitenverbindung (13) zu senden sind, wobei der Satz von elektrooptischen Rückwärts-Repeatern (46) einen Wellenlängendemultiplexer (46c), der die verschiedenen von der Intersatellitenverbindung (13) empfangenen optischen Träger trennt, und optisch-elektrische Demodulatoren (46e) zum Demodulieren der optischen Signale und zum Zurückgewinnen von Funkfrequenzsignalen, die zu der zweiten Gateway-Station (24) zu übertragen sind, umfasst.

3. Satellitentelekommunikationssystem nach Anspruch 1, **dadurch gekennzeichnet, dass** die erste und zweite Zuführungsleitung (22, 25) optische Infrarotverbindungen im freien Raum sind, und dadurch, dass der Begleitsatellit (11) einen Satz von optischen Vorwärts-Repeatern (47) zum Sicherstellen des Empfangens und Sendens von von der zweiten Gateway-Station (24) kommenden optischen Trägern zu der Intersatellitenverbindung (13) und einen Satz von optischen Rückwärts-Repeatern (48) zum Sicherstellen des Empfangens und Wellenlängendemultiplexierens von von der Intersatellitenverbindung (13) kommenden optischen Trägern, dann Verstärken und Wellenlängenmultiplexieren von optischen Trägern, die zu der zweiten Gateway-Station (24) zu senden sind, umfasst, und dadurch, dass der Hauptsatellit (10) ferner einen Satz von mit einem Satz von Vorwärts-Funkfrequenz-Repeatern (43) verbundenen optischen Vorwärts-Repeatern (75) und einen Satz von mit einem Satz von Rückwärts-Funkfrequenz-Repeatern (44) verbundenen optischen Rückwärts-Repeatern (76) umfasst, wobei der Satz von optischen Vorwärts-Repeatern (75) zum Sicherstellen des Wellenlängendemultiplexierens und des Demodulierens von von der ersten Gateway-Station (23) kommenden optischen Trägern ausgelegt ist, die für Benutzerverbindungen (32) gedacht sind, wobei der Satz von optischen Rückwärts-Repeatern (76) zum Sicherstellen der Modulation von optischen Trägern durch von Benutzerverbindungen (32) kommende Funkfrequenzsignale und Wellenlängenmultiplexieren von optischen Trägern ausgelegt sind, die für die erste Gateway-Station (23) gedacht sind.

4. Satellitentelekommunikationssystem nach Anspruch 2, **dadurch gekennzeichnet, dass** der Hauptsatellit ferner ein erstes Mehrstrahl-Antennensystem (60) zum Sicherstellen des Emittierens und Empfangens von Strahlen der ersten Gateway-Station (23) in zwei orthogonalen Polaiisationen, ein zweites Mehrstrahl-Antennensystem (50) zum Sicherstellen des Emittierens und Empfangens von Benutzerstrahlen und ein optisches Endgerät (92) zum Sicherstellen von Kommunikationen auf den Intersatelliten-Verbindungen (13) umfasst.

5. Satellitentelekommunikationssystem nach Anspruch 3, **dadurch gekennzeichnet, dass** der Hauptsatellit ferner ein Mehrstrahl-Antennensystem (50) zum Sicherstellen des Emittierens und Empfangens von Benutzerstrahlen und optische Endgeräte (92, 96) zum Sicherstellen von Kommunikationen auf den Intersatelliten-Verbindungen (13) und auf den Zuführungsleitungen (22) mit der ersten Gateway-Station (23) umfasst.

6. Satellitentelekommunikationssystem nach einem der vorherigen Ansprüche, **dadurch gekennzeichnet, dass** es Folgendes umfasst: mehrere Begleitsatelliten (11, 11'), wobei jeder Begleitsatellit (11, 11') mit dem Hauptsatelliten (10) durch eine dedizierte Intersatelliten-Verbindung (13, 13') verbunden ist, mehrere zweite Gateway-Stationen (24, 24'), die sich in der Gateway-Zelle (21) befinden, und mehrere zweite Zweiwege-Zuführungsleitungen (25, 25'), die jeden Begleitsatelliten (11, 11') mit einer zweiten entsprechenden Gateway-Station (24, 24') verbinden.

7. Satellitenkommunikationssystem nach einem der vorherigen Ansprüche, **dadurch gekennzeichnet, dass** der Begleitsatellit (11) ein Huckepack-Satellit ist, der an Bord eines Drittsatelliten montiert ist, der sich auf der geostationären Umlaufbahn befindet.

## Claims

1. A satellite telecommunication system with multi-beam coverage and frequency reuse, comprising at least one first gateway station (23) located in a gateway cell (21) of a ground gateway service area (20), user terminals (33) located in user cells (31) of a ground user service area (30), a principal satellite (10) located on a geostationary orbit, a first two-way contribution link (22) linking said first gateway station (23) to said principal satellite (10) and two-way user links (32) linking said principal satellite (10) to said user cells (31), at least one second gateway station (24) located in said gateway cell (21), at least one companion satellite (11) remote from said principal satellite (10), a second two-way contribution link (25) linking said second gateway station (24) to said companion satellite (11), and a two-way inter-satellite link (13) linking said principal satellite (10) and said companion satellite (11), **characterised in that** said inter-satellite link (13) is an infrared optical link in free space, **in that** said principal satellite (10) comprises a set of forward inter-satellite optical repeaters (73) connected to a set of forward radiofrequency repeaters (41) and a set of return inter-satellite optical repeaters (74) connected to a set of return radiofrequency repeaters (42), **in that** said set of forward inter-satellite optical repeaters (73) comprises a wavelength demultiplexer (73c) designed to separate optical carriers transmitted by said inter-satellite link and a plurality of optical-electrical demodulators (73e) designed to demodulate optical signals originating from said inter-satellite link (13) and to reconstitute radiofrequency signals to transmit towards user cells, each demodulator being dedicated to an optical carrier, and **in that** said set of return inter-satellite optical repeaters (74) comprises electro-optical modulators (74e) designed to modulate optical carriers by radiofrequency signals originating from user cells (31) and a wavelength multiplexer (74c) that groups the various optical carriers to transmit towards said companion satellite.

2. The satellite telecommunication system according to claim 1, **characterised in that** said first and second contribution links (22, 25) are radiofrequency links, and **in that** said companion satellite (11) comprises a set of forward electro-optical repeaters (45) and a set of return electro-optical repeaters (46), said set of forward electro-optical repeaters (45) comprising electro-optical modulators (45e) designed to modulate optical carriers by radiofrequency signals originating from said second gateway station (24) and a wavelength multiplexer (45c) that groups the various optical carriers to transmit on said inter-satellite link (13), said set of return electro-optical repeaters (46) comprising a wavelength demultiplexer (46c) that separates the various optical carriers received from said inter-satellite link (13) and optical-electrical demodulators (46e) designed to demodulate the optical signals and to reconstitute radiofrequency signals to transmit towards said second gateway station (24).

3. The satellite telecommunication system according to claim 1, **characterised in that** said first and second contribution links (22, 25) are infrared optical links in free space and **in that** said companion satellite (11) comprises a set of forward optical repeaters (47) designed to ensure the reception and the transmission of optical carriers originating from said second gateway station (24) towards said inter-satellite link (13) and a set of return optical repeaters (48) designed to ensure the reception and the wavelength demultiplexing of optical carriers originating from said inter-satellite link (13), then the amplification and the wavelength multiplexing of optical carriers to be transmitted towards said second gateway station (24), and **in that** said principal satellite (10) further comprises a set of forward optical repeaters (75) connected to a set of forward radiofrequency repeaters (43) and a set of return optical repeaters (76) connected to a set of return radiofrequency repeaters (44), said set of forward optical repeaters (75) being designed to ensure the wavelength demultiplexing and the demodulation of optical carriers originating from said first gateway station (23) and intended for user links (32), said set of return optical repeaters (76) being designed to ensure the modulation of optical carriers by radiofrequency signals originating from user links (32) and the wavelength multiplexing of optical carriers intended for said first gateway station (23).

4. The satellite telecommunication system according to claim 2, **characterised in that** said principal satellite further comprises a first multi-beam antenna system (60) for ensuring the emission and reception of beams of said first gateway station (23) in two orthogonal polarisations, a second multi-beam antenna system (50) for ensuring the emission and the reception of user beams and an optical terminal (92) for ensuring communication on said inter-satellite links (13).

5. The satellite telecommunication system according to claim 3, **characterised in that** said principal satellite further comprises a multi-beam antenna system (50) for ensuring the emission and reception of users beams, and optical terminals (92, 96) for ensuring communication on said inter-satellite links (13) and on said contribution links (22) with said first gateway station.

6. The satellite telecommunication system according to any one of the preceding claims, **characterised in that** it comprises a plurality of companion satellites (11, 11'), each companion satellite (11, 11') being linked to said principal satellite (10) by a dedicated inter-satellite link (13, 13'), a plurality of second gateway stations (24, 24') located in said gateway cell (21) and a plurality of second two-way contribution links (25, 25') linking each companion satellite (11, 11') with a second corresponding gateway station (24, 24').

7. The satellite telecommunication system according to any one of the preceding claims, **characterised in that** said companion satellite (11) is a piggyback satellite mounted on-board a third satellite located on the geostationary orbit.
